# EUROPÄISCHE PATENTSCHRIFT

(11) **EP 0 735 449 B1**
(45) Veröffentlichungstag und Bekanntmachung des Hinweises auf die Patenterteilung: **06.06.2001**
(21) Anmeldenummer: 96104753.7
(22) Anmeldetag: 26.03.1996
(51) Int. Cl.: G05D 23/00, G05D 23/19

(54) **Verfahren zum Betrieb eines Backofens mit unterschiedlicher Auslastung**
Method of operating a cooking oven with variable load
Procédé de mise en oeuvre pour four avec charge variable

(30) Priorität: 30.03.1995 DE 19511621
(43) Veröffentlichungstag der Anmeldung: 02.10.1996
(73) Patentinhaber: MIWE Michael Wenz GmbH, 97450 Arnstein (DE)
(72) Erfinder: Adams, Christoph, Dr.-Ing., 97440 Werneck (DE); Klatt, Uwe, Dipl.-Ing., 97230 Estenfeld (DE); Hammer, Jochen, Dipl.-Ing., 97440 Werneck (DE)
(74) Vertreter: Böck, Bernhard, Dipl.-Ing.

(56) Entgegenhaltungen:
- EP-A- 0 579 917
- DE-A- 3 342 416
- DE-A- 4 319 652

## Beschreibung

Die Erfindung betrifft ein Verfahren zur Temperaturregelung eines Backofens in Anpassung an unterschiedliche Auslastung, wobei die Heizleistung des Backofens entsprechend einem vorgegebenen Soll-Temperaturverlauf regelbar ist, nach dem Oberbegriff des Patentanspruchs 1.

Es ist bekannt, Backöfen in der Art zu betreiben, daß zunächst ein Soll-Temperaturverlauf vorgegeben ist, worauf dann sämtliche Backzyklen sich an diesem Soll-Temperaturverlauf orientieren. Dies geschieht üblicherweise dadurch, daß kontinuierlich oder in kurzen Abständen der Ist-Temperaturverlauf im Backofen ermittelt und mit dem Soll-Temperaturverlauf verglichen wird. Liegt die gemessene Temperatur unter der Soll-Temperatur, wird der Brenner in Betrieb gesetzt oder weiter in Betrieb gehalten; liegt die Ist-Temperatur über der Soll-Temperatur, erfolgt ein Abschalten des Brenners.

Es ist ein erheblicher Nachteil dieses bekannten Verfahrens zum Betrieb eines Backofens, daß der Ist-Temperaturverlauf nicht nur von dem vorgegebenen Soll-Temperaturverlauf abhängt, sondern auch von der Auslastung des Backofens, d.h. dem Belegungsgrad. Dies gilt insbesondere für den Anbackzyklus, d. h. den Beginn des Backvorganges. Wenn beispielsweise zehn Bleche mit Teigrohlingen in gefrorenem oder zumindest stark abgekühltem Zustand in den vorgeheizten Backofen eingebracht werden, erfolgt zu Beginn des Backvorganges ein starkes Absinken der Backraumtemperatur, wobei dann, nach Erreichen des Minimums der Anstieg ebenfalls relativ langsam erfolgt. Wird nun im Gegensatz dazu lediglich ein Blech mit Teigrohlingen eingebracht, erfolgt eine wesentlich geringere Temperaturabsenkung und ein schnellerer Anstieg auf die gewünschte Backtemperatur. Dies führt in der Praxis dazu, daß bei unterschiedlicher Auslastung des Backofens ein unterschiedliches Backergebnis, und insbesondere ein unterschiedlicher Bräunungsgrad der Backware oder, im Extremfall, sogar verbrannte Backware erhalten wird.

Ausgehend von diesem Stand der Technik ist es die Aufgabe der vorliegenden Erfindung, ein Verfahren zu liefern, das auch bei unterschiedlicher Auslastung des Backofens ein wesentlich gleichmäßigeres Backergebnis ermöglicht.

Diese Aufgabe wird durch ein Verfahren nach der Lehre des Patentanspruchs 1 gelöst.

Vorteilhafte Ausgestaltungen der Erfindung sind Gegenstand der Unteransprüche.

Der Erfindung liegt zunächst einmal die Erkenntnis zugrunde, daß die Abweichung des Ist-Temperaturverlaufes vom Soll-Temperaturverlauf dadurch erfolgt, daß nicht unbegrenzt Heizleistung zur Verfügung steht. Da nun jedoch die Heizleistung des Herdes, sei dies nun ein durch Gas, elektrisch oder sonstwie betriebener Herd, auf die maximale Auslastung des Ofens abgestimmt ist, stellt die Abweichung des Ist-Temperaturverlaufes, zumindest zu Beginn des Backvorganges, vom vorgegebenen Soll-Temperaturverlauf den ungünstigsten Fall dar, der mit voller Herdleistung zu erzielen ist. Dieser Verlauf ist somit, von Regelschwankungen abgesehen, bei geringerer Auslastung des Backofens mit der gleichen oder verminderter Heizleistung in jedem Fall ohne Schwierigkeiten zu erzielen.

Dementsprechend wird erfindungsgemäß zunächst einmal der Backofen mit voller Auslastung entsprechend dem vorgegebenen Soll-Temperaturverlauf gefahren. Dabei ergibt sich, wie vorstehend beschrieben, zusätzlich zu den unvermeidlichen Regelschwankungen, eine erhebliche Abweichung des Ist-Temperaturverlaufes vom Soll-Temperaturverlauf. Dieser Ist-Temperaturverlauf wird während des gesamten Backvorganges bei voller Auslastung ermittelt und gespeichert. Für alle weiteren Backvorgänge in diesem Backofen mit der gleichen Backware, beispielsweise Teigrohlingen für Brötchen, wird der bei voller Auslastung ermittelte Ist-Temperaturverlauf als neuer Soll-Temperaturverlauf verwendet. Mit anderen Worten, der erste Backverlauf mit voller Auslastung stellt praktisch eine Lernphase für alle weiteren Backvorgänge dar, in der die für den reibungslosen Betrieb notwendige Soll-Temperaturvorgabe ermittelt und gespeichert wird.

Dieser neue Soll-Temperaturverlauf stellt praktisch das mit der gegebenen Herdleistung bei voller Auslastung erreichbare Optimum dar. Mit verringerter Auslastung kann daher mit der installierten Herdleistung durch die Steuerung bzw. Regelung des Backofens problemlos, abgesehen von Regelschwankungen, nachvollzogen werden, so daß letztendlich mit allen Belegungsgraden der gleiche Temperaturverlauf im Backofen und damit das gleiche Backergebnis für eine bestimmte Sorte von Teigrohlingen, beispielsweise Brötchen, erzielt werden kann.

Um die bei der Ermittlung des Ist-Temperaturverlaufes in der Lernphase, d.h. dem ersten Backvorgang bei voller Auslastung, auftretenden Regelschwankungen zu eliminieren, wird gemäß einem bevorzugten Ausführungsbeispiel der Erfindung der ermittelte Ist-Temperaturverlauf vor der Anwendung als neuer Soll-Temperaturverlauf geglättet. Die Glättung kann dabei in an sich bekannter Weise mathematisch, insbesondere durch die Anwendung von Spline-Funktionen oder Stützstellenberechnung, erfolgen. Ebenfalls vorzugsweise erfolgt diese Glättung selbsttätig im Steuerungs- bzw. Regelungssystem des Backofens, der dazu mit einem programmierbaren Mikroprozessor-System ausgestattet sein kann.

Das erfindungsgemäße Verfahren kann grundsätzlich für alle Arten von Backöfen Verwendung finden, die mit unterschiedlicher Auslastung betrieben werden sollen. Vorzugsweise jedoch findet das Verfahren Anwendung bei sogenannten Laden-Backofen, die in Verkaufsstellen, beispielsweise Bäckereifilialen, Lebensmittelfilialen oder dergleichen betrieben werden, wobei in diesen Ladenbacköfen in Abhängigkeit vom aktuellen Geschäftsverlauf ein oder zwei oder mehrere Bleche mit tiefgefrorenen oder stark vorgekühlten Teigrohlingen gebacken oder aufgebacken werden.

Im folgenden ist die Erfindung anhand lediglich ein Ausführungsbeispiel zeigenden Figuren näher erläutert. Es zeigt
- **Fig. 1**: in schematischer Darstellung den Temperaturverlauf eines Backverfahrens nach dem Stand der Technik in einem Backofen mit unterschiedlicher Auslastung;
- **Fig. 2**: den Temperaturverlauf in einem Backverfahren gemäß der Erfindung in der Lernphase mit voller Auslastung;
- **Fig. 3**: den Temperaturverlauf gemäß dem erfindungsgemäßen Verfahren bei verringerter Auslastung unter Vorgabe des aus **Fig. 2** ermittelten SollTemperaturverlaufes.

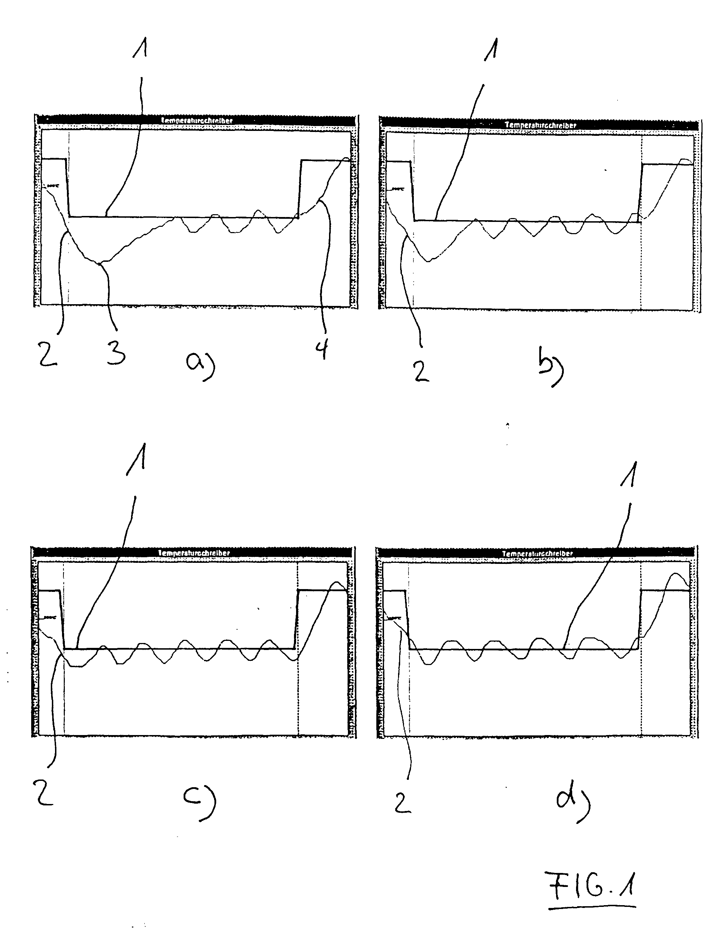

In den Abbildungen a bis d der **Fig. 1** sind die Ist-Temperaturverläufe und der Soll-Temperaturverlauf eines Backverfahrens nach dem Stand der Technik bei verschiedener Auslastung schematisch dargestellt. Die Horizontalachse entspricht dabei der Zeitachse; die Vertikalachse entspricht der Temperatur des Backofeninnenraums. Die Abbildung a stellt den Temperaturverlauf bei voller Auslastung, d. h. bei diesem Beispiel bei einer Beschickung mit vier Blechen Brötchen, dar. Abbildung b betrifft eine Beschickung mit drei Blechen, Abbildung c mit zwei Blechen und Abbildung d die Beschickung mit lediglich einem Blech Teigrohlingen für Brötchen.

Wie den Abbildungen der **Fig. 1** zu entnehmen ist, ist zur Regelung der Temperatur bei sämtlichen Auslastungsgraden der gleiche Soll-Temperaturverlauf 1 vorgegeben. Bei Beschickung des Backofens mit vier Backblechen (Abbildung a) erfolgt aufgrund der niedrigen Temperatur der tiefgefrorenen Teigrohlinge, d. h. insbesondere der Temperaturdifferenz zwischen dem Backofeninnenraum und den Teigrohlingen, zu Beginn des Backvorgangs eine starke Absenkung der Ist-Temperatur 2 bis hin zu einem Minimum 3, das erheblich unter der gewünschten Backtemperatur liegt. Von diesem Minimum 3 steigt die Ist-Temperatur 2 nur relativ langsam bis zur Backtemperatur und wird dann, abgesehen von Regelschwankungen, entsprechend der Ausgestaltung des Regelsystems, auf einem mehr oder weniger konstanten Wert gehalten. Zum Ende des Backvorgangs erfolgt ein Aufheizen auf Ausbacktemperatur 4, wobei dieses Aufheizen aufgrund der relativ hohen Masse der aufzuheizenden Teigrohlinge bzw. Brötchen wiederum relativ langsam erfolgt.

Wie nun der Vergleich mit den Abbildungen b, c und d ergibt, hängt insbesondere der Temperaturabfall zu Beginn des Backvorganges stark von der Auslastung des Backofens, d. h. der Belegung des Backofens mit den verwendeten Backblechen ab. So nimmt der Temperaturabfall zu Beginn des Backvorganges von der vollen Auslastung (Abbildung a) bis zur Beladung mit lediglich einem Blech (Abbildung d) kontinuierlich ab. Ähnliches gilt für das Aufheizen der nahezu fertigen Backware gegen Ende des Backvorganges.

Da nun das Integral des Ist-Temperaturverlaufes 2, d. h. die Fläche zwischen der Zeitachse und der Ist-Temperaturkurve, ein Maß für die auf die Teigrohlinge abgegebene Energie und damit letztendlich auch ein Maß für den Bräunungsgrad der Teigrohlinge darstellt, ist leicht ersichtlich, daß der Bräunungsgrad der Backware vom Betrieb des Backofens mit voller Auslastung (Abbildung a) bis hin zum Betrieb mit geringer Auslastung (Abbildung d) zunimmt. Eine Gleichmäßigkeit der Backware ist damit nicht mehr gegeben.

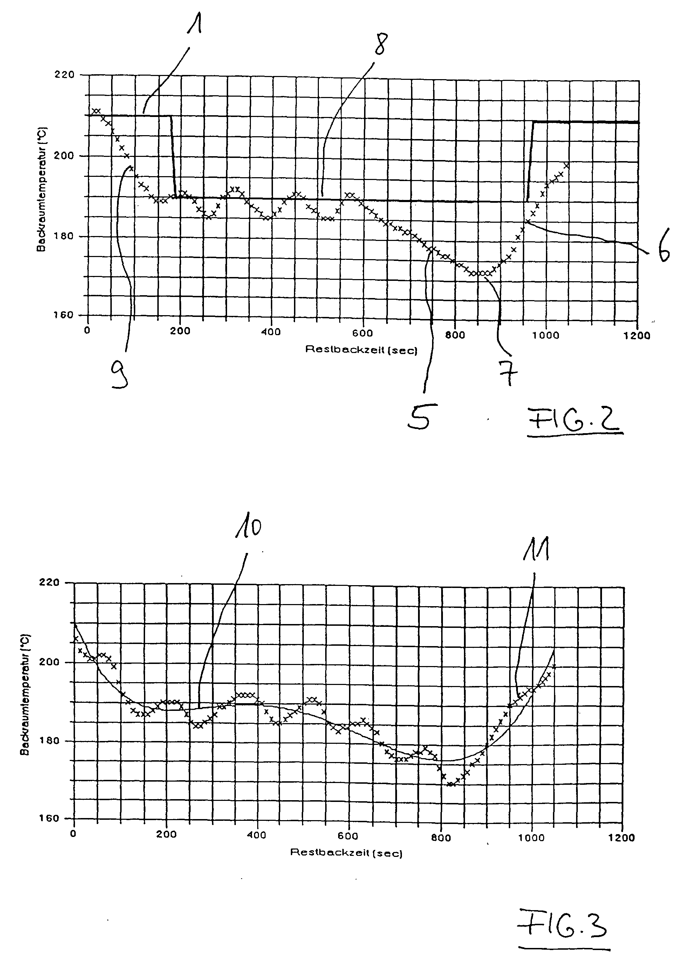

In der **Fig. 2** ist ein Diagramm gemäß dem erfindungsgemäßen Verfahren dargestellt, das in seinem Aufbau im wesentlichen den schematischen Diagrammen nach **Fig. 1** entspricht. Jedoch ist auf der Zeitachse nicht die Backzeit, sondern die Restbackzeit aufgetragen. Zum Vergleich mit den Diagrammen nach **Fig. 1** muß also das Diagramm nach **Fig. 2**, ebenso wie das Diagramm nach **Fig. 3** "von rechts nach links" gelesen werden. In diesem Diagramm ist zunächst einmal der Soll-Temperaturverlauf 1 durch eine ununterbrochene Linie dargestellt, wobei dieser Soll-Temperaturverlauf 1 im wesentlichen dem Soll-Temperaturverlauf nach **Fig. 1** entspricht. Weiter ist in der Darstellung nach **Fig. 2** ein Ist-Temperaturverlauf 5 im Backofen dargestellt, der dem Ist-Temperaturverlauf bei voller Belastung eines Backofens, beispielsweise mit vier Blechen Teigrohlingen für Brötchen entspricht. Dabei zeigt der Ist-Temperaturverlauf 5 im wesentlichen den gleichen Aufbau wie der Ist-Temperaturverlauf nach **Fig. 1**, d. h. zunächst zu Beginn einen relativ starken Abfall 6 bis zu einem Minimalwert 7, gefolgt von einem Aufheizen auf die Backtemperatur 8. Auf dieser Backtemperatur 8 wird die Ofentemperatur zunächst, abgesehen von Regelschwankungen, gehalten, bis gegen Ende des Backvorganges ein Aufheizen 9 auf die Ausbacktemperatur erfolgt. Insoweit entspricht der Ist-Temperaturverlauf gemäß Fig. 2 dem Ist-Temperaturverlauf gemäß **Fig. 1a.**

Erfindungsgemäß wird jedoch für die weiteren Backvorgänge, insbesondere mit verringerter Auslastung, der Ist-Temperaturverlauf 5 nach **Fig. 2** als neuer Soll-Temperaturverlauf für die weiteren Backvorgänge verwendet.

In **Fig. 3** ist der Temperaturverlauf beim Betrieb des gleichen Backofens mit verringerter Belastung, hier bei der Beladung mit lediglich einem Blech mit Teigrohlingen für Brötchen, dargestellt. Wie dieser Abbildung zu entnehmen ist, entspricht der neue Soll-Temperaturverlauf 10, der durch eine ununterbrochene Linie dargestellt ist, dem Ist-Temperaturverlauf 5 nach **Fig. 2**, wobei dieser Ist-Temperaturverlauf 5 lediglich mathematisch mit Hilfe von Spline-Funktionen geglättet ist. Entsprechend diesem neuen Soll-Temperaturverlauf 10 wird nunmehr der Ist-Temperaturverlauf 11 gesteuert bzw. geregelt, wobei der Ist-Temperaturverlauf 11 ohne Probleme dem Soll-Temperaturverlauf 10, abgesehen von den Regelschwankungen, angepaßt werden kann.

Wie nun ein Vergleich der Ist-Temperaturkurven 9 in der **Fig. 2** (volle Belastung) und 11 der **Fig. 3** (minimale Belastung) ergibt, entsprechen sich diese Temperaturverläufe, abgesehen von den Regelschwankungen, im wesentlichen. Dies bedeutet mit anderen Worten, daß die Energieabgabe vom Backofen an die Teigrohlinge in beiden Fällen in etwa gleich ist, so daß sich auch im Betrieb im wesentlichen der gleiche Bräunungsgrad, d. h. im wesentlichen die gleiche Qualität der Backware ergibt.

## Patentansprüche

1. Verfahren zur Temperaturregelung eines Backofens in Anpassung an unterschiedliche Auslastung, wobei die Heizleistung des Backofens entsprechend einem vorgegebenen Soll-Temperaturverlauf (1) regelbar ist, dadurch **gekennzeichnet,** daß
- zunächst der Backofen mit voller Auslastung entsprechend dem vorgegebenen Soll-Temperaturverlauf (1) gefahren wird,
- gleichzeitig der Ist-Temperaturverlauf (5) ermittelt und gespeichert wird, und
- der ermittelte Ist-Temperaturverlauf (5) als Soll-Temperaturverlauf (10) für den Betrieb mit verringerter Auslastung verwendet wird.

2. Verfahren nach Anspruch 1,
dadurch **gekennzeichnet,**
daß der beim Backen mit voller Auslastung ermittelte Ist-Temperaturverlauf (10) vor der Anwendung als neuer Soll-Temperaturverlauf geglättet wird.

3. Verfahren nach Anspruch 2,
dadurch **gekennzeichnet**,
daß die Glättung mathematisch, insbesondere durch die Anwendung von Spline-Funktionen, erfolgt.

## Claims

1. Method for regulating the temperature of a baking oven so as to adapt to a variable load, wherein the heating power of the baking oven can be regulated according to a predetermined desired temperature characteristic (1),
**characterised in that**
- the baking oven is initially operated at full load according to the predetermined desired temperature characteristic (1),
- the actual temperature characteristic (5) is simultaneously determined and stored, and
- the determined actual temperature characteristic (5) is used as desired temperature characteristic (10) for reduced load operation.

2. Method according to Claim 1,
**characterised in that**
the actual temperature characteristic (10) determined when baking at full load is smoothed before being applied as new desired temperature characteristic.

3. Method according to Claim 2,
**characterised in that**
the smoothing takes place mathematically, in particular by applying spline functions.

## Revendications

1. Procédé pour régler la température d'un four d'une manière adaptée à une charge variable, la puissance de chauffage du four étant réglable en fonction d'une allure prédéterminée (1) de la température de consigne, caractérisé en ce que
tout d'abord on fait fonctionner le four à pleine charge conformément à l'allure prédéterminée (1) de la température de consigne,
on détermine simultanément l'allure réelle (5) de la température et on la mémorise, et
on utilise l'allure réelle déterminée (5) de la température en tant qu'allure de consigne (10) de la température pour le fonctionnement avec une charge réduite.

2. Procédé selon la revendication 1, caractérisé en ce qu'on lisse l'allure réelle (10) de la température, déterminée dans le cas où le four fonctionne à pleine charge, avant son utilisation en tant que nouvelle allure de consigne de la température.

3. Procédé selon la revendication 2, caractérisé en ce que le lissage s'effectue mathématiquement, notamment au moyen de l'utilisation de fonctions spline.
